# EUROPEAN PATENT APPLICATION

(11) **EP 4 549 729 A1**
(43) Date of publication of application: **07.05.2025**
(21) Application number: 23207930.1
(22) Date of filing: 06.11.2023
(51) Int. Cl.: F03D 13/10, F03D 80/50, F03D 80/70, F03D 1/06

(54) **TOOLKIT AND METHOD FOR REPLACING A BLADE BEARING AND METHOD FOR OPERATING A WIND TURBINE**

(71) Applicant: Siemens Gamesa Renewable Energy A/S, 7330 Brande (DK)
(72) Inventor: Pedersen, Jesper Bjerre, 7160 Torring (DK); Soerensen, Johnny, 6920 Videbaek (DK)
(74) Representative: SGRE-Association

(57) **Abstract**

Method for replacing a previously installed blade bearing (1) with a replacement blade bearing (2) in a wind turbine (3), comprising the steps of
- orienting a rotatable component (4) of the wind turbine (3) into a service position (5), in which the previously installed blade bearing (1) is arranged at the lower side of the rotatable component (4),
- disconnecting a rotor blade (6) from the previously installed blade bearing (1) and lowering the rotor blade (6) to create a free space (7) below the previously installed blade bearing (1),
- installing a service platform (8) within the free space (7) by attaching connecting means (9) for the service platform (8) to the rotatable component (4) and/or at least one supporting component (10) of the wind turbine (3) in such a way, that the weight of the service platform (8) is at least partially supported by the rotatable component (4) and/or supporting component (10),
- unmounting the previously installed blade bearing (1) from the rotatable component (4) and mounting the replacement blade bearing (2) to the rotatable component (4), wherein the previously installed blade bearing (1) is located on the service platform (8) during and/or after its unmounting and/or wherein the replacement blade bearing (2) is located on the service platform (8) before and/or during its mounting, and
- uninstalling the service platform (8) and connecting the rotor blade (6) to the replacement blade bearing (2).

## Description

### FIELD OF THE INVENTION

The present invention relates to a method for replacing a previously installed blade bearing with a replacement blade bearing in a wind turbine, in particular in an offshore wind turbine, further in particular in a floating offshore wind turbine. Additionally, the invention relates to a toolkit for replacing a previously installed blade bearing with a replacement blade bearing in a wind turbine and a method for operating a wind turbine and/or for feeding electrical and/or chemical energy to an electricity and/or chemical utility grid and/or a chemical and/or electrical storage.

### BACKGROUND

Wind turbines, especially offshore wind turbines, are large structures and servicing components mounted on top of the wind turbine tower is therefore technically challenging. Such a servicing task is, e.g., the replacement of the blade bearing of a rotor blade of the wind turbine, which can fail and need replacement during the lifetime of the wind turbine.

For land-based wind turbines this task can be performed by using a ground-based crane for lowering the rotor blade supported by the previously installed blade bearing to the ground, afterwards lowering the previously installed blade bearing to the ground after dismounting it, then raising the replacement blade bearing from the ground and attaching it to the wind turbine and then rising and attaching the previously lowered rotor blade to the installed replacement blade bearing.

For offshore wind turbines that are fixed to the bottom of the sea, essentially the same approach can be used to replace a blade bearing, wherein the ground-based crane is replaced by a crane of a jack-up-vessel, wherein the jack-up-vessel is also used as the lay down area for the lowered rotor blade and the blade bearings.

With an increasing size of the wind turbine, increasingly larger cranes and jack-up-vessels are necessary for this task, which noticeably increases the complexity and cost of the servicing operation. The discussed procedure is also problematic, when the blade bearing of a floating wind turbine needs to be replaced. Since this type of wind turbine is typically deployed in deep waters, the use of a jack-up-vessel is typically not possible and even in cases, when a jack-up-vessel could in principle be used, it would be necessary to somehow block or compensate for the relative movement of the crane and the wind turbine. Currently an exchange of a blade bearing in a floating wind turbine therefore requires the wind turbine to be drawn into shallow waters and anchored there to allow for the use of the previously discussed method.

It is an objective problem to provide an optimized solution for replacing a blade bearing of a wind turbine and to avoid disadvantages, in particular to optimize with respect to the work load and cost of such a replacement.

### SUMMARY

According to an aspect, the problem is solved by providing a method for replacing a previously installed blade bearing with a replacement blade bearing in a wind turbine, in particular in an offshore wind turbine, further in particular in a floating offshore wind turbine, comprising the steps of
- orienting a rotatable component of the wind turbine carrying of the previously installed blade bearing into a service position, in which the previously installed blade bearing is arranged at the lower side of the rotatable component,
- disconnecting a rotor blade from the previously installed blade bearing and lowering the rotor blade to create a free space below the previously installed blade bearing,
- installing a service platform within the free space by attaching connecting means for the service platform to the rotatable component and/or at least one supporting component of the wind turbine in such a way, that the weight of the service platform is at least partially supported by the rotatable component and/or the supporting component,
- unmounting the previously installed blade bearing from the rotatable component and mounting the replacement blade bearing to the rotatable component, wherein the previously installed blade bearing is located on the service platform during and/or after its unmounting and/or wherein the replacement blade bearing is located on the service platform before and/or during its mounting, and
- uninstalling the service platform and connecting the rotor blade to the replacement blade bearing.

In particular the problem is solved by providing methods and a toolkit according to the independent claims.

The installation of the service platform avoids the need to lower the previously installed blade bearing onto the ground or to the deck of a ship, e.g., a jack-up-vessel and/or the need to lift the replacement bearing up from the ground or the deck of the ship. As discussed in more detail below, this can allow for the use of a crane that is part of the wind turbine or that can be installed on a component of the wind turbine to perform all or most of the lifting tasks necessary during the replacement procedure. The use of a ground- or ship-based crane can therefore be avoided or can at least be limited to tasks that are less sensitive to a relative movement between the crane and the wind turbine and/or that require a shorter time. This can lower the cost and time requirement for the service and in particular allow for the exchange of the blade bearing of a floating wind turbine in its place of operation without the need to first drag it into shallow waters.

In the method according to the present invention, it can potentially be possible to perform any lifting tasks, which cannot be performed by a crane of the wind turbine or a crane mounted to the wind turbine, by a helicopter or some other flying device, therefore allowing a servicing of wind turbines of essentially arbitrary height without the need to scale the used crane or cranes accordingly. Since the weight of the service platform is at least partially supported by a component or multiple components of the wind turbine, a relative movement between the service platform and the rotatable component and other relevant components of the wind turbine can be negligible or at least very small.

In the course of this document, the invention will mainly be discussed using a global coordinate system spanned by the vertical direction and the horizontal plane. The vertical direction typically coincides with the main direction of extension of a tower of the wind turbine. Within the horizontal plane, the wind direction is especially relevant and an up-wind and a down-wind direction can be distinguished. During the normal operation of the wind turbine, the hub, or in general the part of the rotor carrying the rotor blades, will be oriented in the up-wind direction. Therefore, the up-wind direction is equivalent to a forward direction and typically the direction facing away from the nacelle and/or the tower of the wind turbine. In other words, it is assumed, that the rotor blades are arranged in the up-wind direction from the tower and that the position of the tower is in the down-wind direction from the rotor blades. The direction within the horizontal plane that is orthogonal to the up-wind direction can be called cross-wind direction.

In the service position, the rotational axis of the previously installed blade bearing can in particular be essentially vertical, e.g., an angle of less than 30° or less than 15° to the vertical direction. The rotatable component is in particular formed by or connected to the rotor of the wind turbine and can, e.g., be formed by a hub of the wind turbine. The rotational axis of the rotatable component can be essentially horizontal, e.g., at an angle of less than 30° or less than 15° to the horizontal plane.

At least the outer ends of the wind turbine blades can extend at an angle to the vertical direction in many wind turbines, to increase the distance between the tower and the tips of the rotor blades during operation. While this can be achieved by an appropriate shaping of the rotor blades themselves, it is additionally or alternatively possible, that the rotational axis of the respective blade bearing is tilted in the up-wind direction to increase this distance, therefore defining a lower threshold for the angle between the rotational axis of the blade bearing and the vertical direction that can be achieved by rotating the rotatable component.

The service platform can be installed within the free space between the previously installed blade bearing and the lowered rotor blade, while the lowered rotor blade is attached to the rotatable component or a further component of the wind turbine via blade attachment means.

Installing the service platform while the rotor blade is still attached has multiple advantages. On the one hand the rotor blade does not need to be lowered to the ground or to the deck of a ship in this case. This can especially allow for a lowering of the rotor blade without the use of a ground- or ship-based crane. Additionally, there is no need for a dedicated lay-down area, e.g., on the deck of a ship, to hold the lowered rotor blade while the exchange of the blade bearing is performed. On the other hand, the lowered rotor blade can be used to provide additional support for the service platform.

The blade attachment means can comprise wires, wherein the lowered rotor blade is connected to the rotatable component and/or to at least one further rotor blade attached to the rotatable component via the wires.

While an initial lowering of the rotor blade for at least part of the lowering distance can, e.g., be performed by pistons driven by, e.g., hydraulic actuators, the use of wires to support the rotor blade in its lowered position can allow for a larger extension of the free space in the horizontal direction. While pistons for lowering the rotor blade are preferably placed within the diameter of the blade bearing and extend in an at least approximately vertical direction, wires for supporting the rotor blade can preferably extended an angle to the vertical direction, e.g., when the ends of the wires that are not attached to the rotor blade are held at a diameter well outside of the outer diameter of the blade bearing. This allows for the free space and therefore the service platform to the extent beyond the outer diameter of the blade bearing in all directions in the horizontal plane, therefore allowing for a more robust support and better handling of the blade bearing. The increased free space can additionally or alternatively ease the installation of the service platform.

Each respective wire can, e.g., be attached to an eye or a similar fixation means attached to the rotor blade. The respective fixation means can in particular be attached to the rotor blade via a bolt that can, e.g., be screwed into a respective threaded opening used to attach the rotor blade to the blade bearing during the normal operation of the wind turbine, e.g., by a respective bolt.

An advantageous connection providing a large free space can, e.g., be achieved by arranging a respective wire loop around each one of two further rotor blades. This respective loop can then be connected by a respective further wire to the rotor blade. The lengths of the respective wire loop and/or of the downward extension of the respective further wire can, e.g., be controlled via a winch or some other actuator.

At least one pair of the wires can be pushed horizontally apart by a spreading component that guides the wires of the pair prior to and/or after installing the service platform. The spreading component can, e.g., be installed before the installation of the service platform to allow for a wider gap between the wires, between which the service platform is to be inserted.

It can however be advantageous, to use the spreading component after the installation of the service platform. The spreading component can in this case, e.g., be a part of the service platform or attached to the service platform and/or can, e.g., be used to the spread a pair of wires after installing the service platform. The spreading component can be used to improve access to the service platform. This can be useful to allow for an easier lifting of the replacement blade bearing onto the service platform and/or of the previously installed blade bearing off the support platform, e.g., via a crane.

While the spreading component can, in principle, be installed at a higher vertical position than the service platform, an arrangement at a lower height, in particular below the service platform, can be advantageous to allow for an unhindered access to the service platform from above, e.g., for a crane.

The spreading component can, e.g., be a stiff bar with guiding means for a respective wire of the pair at each end or a telescopic bar that can, e.g., be extended by an actuator after connecting it to the wires of the pair to spread the wires.

Additionally or alternatively, the blade attachment means can comprise at least one offset component, wherein at least one of the wires is connected to the lowered rotor blade or to the rotatable component or to the further rotor blade or to a respective one of the further rotor blades via the respective offset component, wherein the respective wire is connected to the respective offset component at a connection point of the offset component, that is horizontally spaced apart from the lowered rotor blade and/or the rotatable component and/or the respective further rotor blade. The horizontal spreading between the wires, especially in the vertical range in which the service platform is installed, can be increased by using the at least one offset component to horizontally offset the connection point of at least one of the wires.

The step of installing the service platform can comprise the installation of further connecting means that connect the service platform to the lowered rotor blade. This can improve the accessibility of the service platform from above, which is especially relevant, when the method comprises a placement of the replacement blade bearing onto the service platform and/or a removal of the previously installed blade bearing from the service platform by a crane.

It can be advantageous, to limit the number of connections of the service platform to the rotatable component or any other components of the wind turbine located above the service platform, to improve access to the service platform. In an advantageous embodiment only two of these connections can be used. While such a limited number of connections can be sufficient to bear the weight of the service platform and the blade bearing or blade bearings located on the service platform, an additional support of the service platform to avoid a tilting of the service platform can be advantageous in this case. Such an additional support can be provided by the lowered rotor blade via the connecting means. This connection can only serve to avoid a tilting of the service platform. In this case it can, e.g., be sufficient to use wires as connecting means. It can however be advantageous, to use a load bearing connecting means, e.g., at least one support beam, between these components.

As discussed in more detail below, it is possible to allow for a vertical movement of the service platform to increase or decrease the distance to the rotatable component. In this case the connecting means can be shortened or lengthened to compensate for a change in the distance between the lowered rotor blade and the service platform. This can, e.g., be achieved by using a winch to shorten and lengthen a connecting wire or by the use of a telescopic push rod as the connecting means or as part of the connecting means.

A push rod can be mounted to the tower or to a tower platform mounted to the tower, wherein an end of the push rod, that is in particular shaped as a fork, receives a supported section of the lowered rotor blade. The supported section of the rotor blade can in particular be located in the lower 20% or 40% of the rotor blade. The push rod can push the lower end of the rotor blade away from tower. When at least part of the rotor blade extends at an angle to the vertical direction during the normal operation of the wind turbine, as discussed above, a torque due to gravity will typically push the rotor blade towards the push rod once the rotor blade is disconnected from the previously installed blade bearing. If necessary, an additional fixation tool, e.g., tag lines that extend across the side of the lowered rotor blade facing away from the tower and that are, e.g., attached to the tower platform or the tower, can be used to further stabilize the position of the lower part of the lowered rotor blade.

The push rod can in particular be telescopic to allow for an adjustment of the position of its end that is contacting the lowered rotor blade and therefore for adjusting the distance between the supported section and the tower. This can especially be useful, when the push rod is used to support the rotor blade while it is lowered and/or while it is raised back up to the replacement bearing.

The use of a fork shaped push rod can be advantageous, since this shape can also support the lowered rotor blade with respect to a movement in the cross-wind direction.

The tower platform can especially be a platform that is formed as a part of a transition piece between a lower and an upper tower section and/or that can be located in the lower half of the tower.

The rotor blade can be lowered for at least a first part of the lowering distance by shifting bolts that are attached to the rotor blade in parallel to the rotational axis of the previously installed blade bearing by at least one actuator.

Additionally or alternatively, the rotor blade can be lowered for at least a second part of the lowering distance by using a winch to lower wires that connect the rotor blade to the rotatable component and/or to at least one further rotor blade attached to the rotatable component.

Preferably the rotor blade is firstly lowered throughout the first part of the lowering distance using the actuator to shift the bolts in parallel to the rotational axis. The respective bolt can extend through a respective through hole of the blade bearing. The actuator can, e.g., be a hydraulic or an electric actuator. The through holes can especially be used during the normal operation of the wind turbine to attach the rotor blade to the blade bearing. This part of the lowering process will be described in more detail later.

After this initial lowering, the contact surface of the blade root, which is attached to the blade bearing during the normal operation of the wind turbine, is exposed. In this intermediate lowering position, the bolts and/or or actuators for shifting these bolts can be disconnected and/or wires can be connected to the rotor blade as discussed above. A further lowering through the second part of the lowering distance can then be performed using these wires.

While it is, in principle, possible, to use the hydraulic actuator or the winch or some other lowering means for the full lowering distance, the discussed combination is especially advantageous. During the initial lowering, any tilting of the rotor blade should be avoided to avoid damage to the wind turbine. Therefore, the distribution of forces across an upper surface of the blade root should be carefully controlled, especially when the center of gravity of the rotor blade is offset with respect to the rotational axis of the blade bearing and/or when the rotational axis is at an angle to the vertical direction, since gravity exerts a torque on the rotor blade in both of these circumstances. Since an exertion of a downward force on parts of the upper surface of the blade root, that can compensate such a torque, can typically not be achieved by using wires, this part of the lowering is advantageously performed by shifting bolts. In many cases, e.g., when using hydraulic pistons as actuators, achieving a sufficient lowering distance by this approach alone would require rather large actuators. Therefore, the second part of the lowering process can advantageously be performed by using wires and a winch.

To use hydraulic actuators to lower the blade, in a preparatory step, some of the bolts that connect the previously installed blade bearing to the rotor blade can be removed. These bolts typically extend through a respective through hole of the previously installed blade bearing. Longer bolts can then be inserted into these through holes and connected to the rotor blade, e.g., by screwing them to threaded openings of the rotor blade.

These longer bolts can be mounted a respective actuator that the can, e.g., be supported by the previously installed blade bearing itself and/or other components of the wind turbine. The actuators can, e.g., be hydraulic or electric actuators that can shift the newly installed, longer bolts downward to lower the blade and/or upward to raise the blade.

Once the actuators are mounted, the rotor blade can be supported by these actuators and the remaining bolts connecting the rotor blade to the previously installed blade bearing can therefore be removed.

Once these further bolts are removed, the actuators can be actuated to lower the rotor blade by vertically shifting the respective bolt connected to the respective actuator. Since rigid bolts are used to connect the respective actuator to the respective section of the blade bearing, the actuators can exert pushing and/or pulling forces onto a respective section of the blade root. This can, e.g., be used to compensate a torque, which is exerted onto the rotor blade by gravity when the center of gravity of the rotor blade is not positioned vertically below the center of the previously installed blade bearing.

A crane mounted to a nacelle of the wind turbine or to a component of the wind turbine mounted in the upper third of a tower of the wind turbine can be used for
- installing the service platform and/or
- for putting the replacement bearing onto the service platform and/or
- for removing the previously installed bearing from the service platform.

Since the service platform is installed relatively close to the rotatable component and therefore the nacelle and/or the top of the tower, the relevant locations can be easily accessible by a crane mounted in the discussed positions. Such a crane is often already present in a wind turbine during its normal operation or can be installed in a preparatory step.

It can be advantageous to extend the reach of the crane, e.g., by installing fly-jib for extending the arm of the crane, prior to using it for all or some of the purposes given above. This can, e.g., be necessary, when using a crane that is part of the wind turbine during its normal operation and that can, e.g., be used to lift supplies that are airlifted to a platform on top of the nacelle to a different position of the wind turbine. Such a crane might not be able to reach all necessary locations for the discussed method without such an extension. The use of a fly-jib for a crane is well-known from other applications and will therefore not be discussed in detail. Extending an existing crane with an additional fly-jib allows for the implementation of the discussed method with relatively little cost and effort.

The wind turbine can comprise a storage platform, which is arranged on top of the nacelle or which is attached to the nacelle or in the upper third of a tower of the wind turbine, wherein the step of installing the service platform comprises moving the service platform from the storage platform to the free space, and/or wherein the step of uninstalling the service platform comprises moving the service platform from the free space to the storage platform, and/or wherein the previously installed blade bearing is moved from the service platform to the storage platform after its unmounting, and/or wherein the replacement blade bearing is moved from the storage platform to the service platform before its mounting.

The service platform and/or the replacement blade bearing can be placed on the storage platform by a helicopter or by some other kind of airlift or, e.g., by a ship crane. After the replacement of the blade bearing is finished, the service platform and/or the previously installed blade bearing can be removed from the storage platform in the same way. Since the placement of these components onto the storage platform and/or their removal needs to be less precise than the handling of these components during the further steps of the method, a relative movement of the helicopter or of an external crane with respect to the storage platform can be acceptable.

It is also possible to use a ship, e.g., a jack-up-vessel, and/or the ground as a laydown area for the service platform and/or the previously installed blade bearing and/or the replacement blade bearing. This can avoid the need for the storage platform or, e.g., reduce the load placed onto the storage platform. It is therefore possible, that the step of installing the service platform comprises moving the service platform from the ship or the ground to the free space, and/or that the step of uninstalling the service platform comprises moving the service platform from the free space to the ship or the ground, and/or that the previously installed blade bearing is moved from the service platform to the ship or the ground after its unmounting, and/or that the replacement blade bearing is moved from the ship or the ground to the service platform before its mounting. Both approaches can be combined, e.g., by using the storage platform to store the service platform before and after its use and by using the ship or the ground to support the respective blade bearing.

Instead of moving the replacement bearing to the service platform after its installation, it is also possible, that the replacement bearing is already arranged on the service platform while the service platform is moved to the free space and installed. Additionally or alternatively, it is also possible, that the previously installed blade bearing initially stays on the service platform and is removed from the free space with the service platform when the service platform is uninstalled.

The service platform can comprise a mounting part, which is connected to the rotatable component and/or the supporting component of the wind turbine after the service platform is installed, and a sliding part that is movable with respect to the mounting part along a movement path. The previously installed blade bearing can then be located on the sliding part during and/or after its unmounting and/or the replacement blade bearing can be located on the sliding part before and/or during its mounting.

The sliding part can be moved along the movement path after unmounting and placing the previously installed blade bearing on the sliding part of the service platform to move the previously installed blade bearing horizontally away from the previous mounting position of the previously installed blade bearing, and/or before mounting the replacement blade bearing to the rotatable component to move the replacement blade bearing towards the previous mounting position of the previously installed blade bearing.

The movement of the sliding part after unmounting and placing the previously installed blade bearing on the sliding part and the movement of the sliding part before mounting the replacement blade bearing to the rotatable component can be the same, in particular linear, movement of the sliding part.

Preferably the previously installed blade bearing moves essentially vertically down during its unmounting. It can, e.g., be pushed onto or drop onto the support platform and/or be lowered with the support platform during this process. Therefore, the horizontal position of the previously installed blade bearing does typically not or hardly change during its removal from the rotatable component.

In an advantageous embodiment, the sliding part has a free area below the mounting position of the previously installed blade bearing and therefore below the rotatable component and a further area extending, e.g., in the cross-wind direction, outside of this area. The replacement blade bearing can already be located in the further area when the service platform is installed or placed there after the installation of the service platform. Since the further area preferably extends beyond the area of the service platform that is covered by the rotatable component, the replacement blade bearing can, e.g., be easily placed in the further area by a crane.

After uninstalling the previously installed blade bearing, it can be located in the free area. By, in particular linearly, moving the sliding part, the previously free area of the sliding part that is now comprising the previously installed blade bearing can be moved outside of the area below the rotatable component, while at the same time moving the further area and therefore the replacement blade bearing below the mounting position for the blade bearing. The replacement blade bearing can therefore be easily mounted, while at the same time the previously installed blade bearing can be easily accessed by the crane or a similar device to remove it from the service platform.

The use of the sliding part is however also advantageous, when the sliding part only carries one blade bearing at a time during the execution of the method. It is, e.g., possible to first locate the sliding part below the previously installed blade bearing, allowing the previously installed blade bearing to be pushed onto or to drop onto the sliding part when it is being uninstalled. Once the previously installed blade bearing is resting on the sliding part, the sliding part can be moved outside of the area below the rotatable component to allow for an easy access to the surface of the sliding part by crane. In this position, the previously installed blade bearing can therefore be easily lifted from the sliding part and, e.g., be placed on the storage platform. The replacement blade bearing can then be placed, e.g., from the storage platform, onto the sliding part. Afterwards the sliding part can be moved below the rotatable component to allow for an easy installation of the replacement blade bearing.

The service platform can comprise a holding surface, wherein the previously installed blade bearing is located on the holding surface during and/or after its unmounting and/or wherein the replacement blade bearing is located on the holding surface before and/or during its mounting. The service platform can, in particular, comprises a counterweight, that is moveable with respect to the holding surface to shift the center of gravity of the service platform. The counter weight can, e.g., be moved
- when the previously installed and/or the replacement blade bearing is put down on and/or lifted off the holding surface and/or
- after the service platform is attached to the rotatable component and/or the supporting component during the installation of the support platform, and/or
- before the service platform is disconnected from the rotatable component and/or the supporting component during the uninstallation of the support platform, and/or
- when the or a sliding part of the service platform is moved with respect to the or a mounting part of the service platform, which is connected to the rotatable component and/or the supporting component of the wind turbine after the service platform is installed.

The movement of the counterweight can therefore, e.g., be used to, at least partially, compensate a shift of the center of gravity of the service platform due to the movement of the sliding part and/or due to putting down and/or lifting off the respective blade bearing. This can, in particular, be used to ensure that the center of gravity of the service platform is at least approximately centered between different points at which the service platform is supported.

The movement of the counter weight can however, additionally or alternatively, be used to purposely shift the center of gravity of the service platform. As discussed above, the service platform can, in particular, be moved into the free space by a crane. In this case, it is easiest to install the service platform, when at least some part of the service platform can already be moved below the rotatable component, while the service platform is still exclusively or at least mainly supported by the crane. To avoid a tilting of the service platform during installation, the center of gravity should preferably be located at least approximately below the arm of the crane. Once the service platform is installed, the center of gravity should however be preferably placed below the rotatable component. For many typical crane geometries and wind turbine geometries, the center of gravity of the service platform can however not be moved below the rotatable component while still being approximately below the arm of the crane. The counterweight can therefore be used to initially place the center of gravity approximately below the arm of the crane. Once the service platform is supported by the rotatable component and/or the support component, the counterweight can then be moved to shift the center of gravity below the rotatable component. Afterwards, the crane can be disconnected from the support platform. In the same way the center of gravity can be shifted below the arm of the crane, once the crane is attached, while the service platform is uninstalled.

The holding surface can in particular be formed by the sliding part of the service platform. The counterweight can in particular be moveably attached to the sliding part or the mounting part in this case. The service platform can in particular comprise an actuator for moving the counterweight, especially automatically.

At least one actuator can be used to adjust the distance between the service platform and the rotatable component after the service platform is installed. This can, e.g., allow the service platform to be lifted until it is in contact with the installed blade earing or until only a small gap, e.g., off less than 30 cm or less than 10 cm, remains between the top of the service platform and of the previously installed blade bearing. In this position of the service platform the previously installed blade bearing can be disconnected from the rotatable component while it is either supported by the service platform or only has a very shallow drop to the service platform. The use of a certain gap can, e.g., be advantageous, when the previously installed blade bearing needs to be pushed out of the rotatable component, as discussed in detail below.

Afterwards the service platform can be lowered to, e.g., allow for a horizontal movement of the previously installed blade bearing, e.g., by moving the sliding part of the service platform. In the same way, the service platform can be used to lift up the replacement blade bearing towards the rotatable component to allow for an easy mounting of the replacement blade bearing.

The actuator, e.g., a winch or a pneumatic piston, can, e.g., modify the length of wire segments connected to the service platform and/or move bolts or similar connecting means, which connect the service platform to the rotatable component and/or the support component, upward and/or downward. When the service platform is attached to the lowered rotor blade, the further connecting means that connect the service platform to the lowered rotor blade can also be moved and/or extended and/or contracted to compensate for the movement of the service platform. Additionally or alternatively, the lowered rotor blade can be lifted or lowered to reduce the relative movement of the service platform and the lowered rotor blade.

The step of unmounting the previously installed blade bearing from the rotatable component can comprise the mounting of at least one removal tool to the previously installed blade bearing by screwing a threaded part of the respective removal tool into a respective threaded through hole of the previously installed blade bearing, wherein the threaded part is tube shaped and houses a push rod that is movable with respect to the threaded part by an actuator of the removal tool, wherein the actuator of the removal tool is actuated after the mounting of the removal tool to push the push rod through the threaded part and therefore through the threaded through hole of the previously installed blade bearing and against a counter surface of the rotatable component, thereby pushing the threaded part and thereby the previously installed blade bearing away from the counter surface.

The respective blade bearing is typically attached to the rotatable component by multiple bolts. Even after removing these bolts, relatively large forces can still be necessary to remove the previously installed blade bearing from the rotatable component, in particular, when the previously installed blade bearing is at least partially housed in an opening of the rotatable component, since the previously installed blade appearing can, e.g., be held in place by friction. It can therefore be advantageous to use at least one of the removal tools discussed above.

The respective threaded through hole used to installed the respective removal tool can especially be a through hole that was housing one of the bolts used for mounting the previously installed blade bearing to the rotatable component.

Preferably multiple removal tools and/or a removal tool having multiple push rods extending through multiple through holes of the previously installed blade bearing are used to apply at relatively evenly distributed pushing force around the full circumference of the previously installed blade bearing.

Besides the inventive method, the invention also concerns a toolkit for replacing a previously installed blade bearing with a replacement blade bearing in a wind turbine, in particular in an offshore wind turbine, further in particular in a floating offshore wind turbine, comprising
- a service platform designed to be installed in a free space below the previously installed blade bearing once a rotor blade of the wind turbine is disconnected from the previously installed blade bearing and lowered to create the free space,
- connecting means for connecting the service platform to at least one component of the wind turbine in such a way, that the weight of the service platform is at least partially supported by that at least one component, and
- a replacement blade bearing.

The toolkit can, in particular, be designed to implement the previously discussed inventive method for replacing a previously installed blade bearing with a replacement blade bearing in a wind turbine.

The various features that can be present in the service platform and/or the connecting means that were discussed above in the context of the inventive method can also be present in the respective component in the toolkit with the discussed advantages.

The toolkit can additionally comprise any or all of the further components discussed above, that can be used in the inventive method. It can, e.g., comprise the further connecting means for connecting the service platform to the lowered rotor blade, and/or the discussed tools for lowering the rotor blade, and/or the removal tool, and/or the blade attachment means for holding the rotor blade in its lowered position, etc.

As discussed above, a crane usable for moving the service platform and/or the replacement blade bearing and/or the previously installed blade bearing can already be part of the wind turbine itself. In this case the toolkit can optionally comprise a fly-jib for extending the crane arm. It is however also possible, that such a crane is a part of the toolkit and is only temporarily installed on the wind turbine.

The toolkit can additionally or alternatively, e.g., comprise a helicopter and/or other means for initially lifting the various components to the storage platform and/or for removing them from the service platform, as discussed above.

The intervention also concerns a system comprising the toolkit and a wind turbine that comprises the previously installed blade bearing.

The invention also concerns a wind turbine that is created by using the previously discussed method and/or toolkit to install a replacement blade bearing.

Additionally, the invention concerns a method for operating a wind turbine, in particular an offshore wind turbine, further in particular a floating offshore wind turbine, and/or for feeding electrical and/or chemical energy to an electricity and/or chemical grid and/or a chemical and/or electrical storage, the method comprising the following steps:
- executing the steps of an embodiment of the method for replacing a previously installed blade bearing according to the present invention, and/or using an embodiment of the toolkit according to the present invention to replace a previously installed blade bearing with a replacement blade bearing in the wind turbine to provide a refurbished state of the wind turbine,
- generating, by the wind turbine in the refurbished state, electrical power and/or electrical energy, and in particular generating at least partially from the electrical energy, further in particular, by transforming electrical energy into hydrogen by electrolysis, chemical energy in form of a gas or liquid, in particular in the form of hydrogen,
- transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and
- supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or a storage device.

It is to be understood that the features mentioned above, for example the installation of the service platform in the free space between the previously installed blade bearing and the lowered rotor blade and the inclusion of a fly-jib in the toolkit, and those yet to be explained below can be used not only in the respective combinations indicated, but also in other combinations or in isolation, without leaving the scope of the present invention. In particular, the features of the different aspects, embodiments, and/or methods of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
- Fig. 1: is a schematic representation of an intermediate step of an embodiment of the method for replacing a previously installed blade bearing according to the present invention, also disclosing an embodiment of the toolkit according to the present invention,
- Fig. 2: is detailed view of a further intermediate step in this embodiment of the method,
- Fig. 3: is a schematic representation of the service platform shown in Fig. 1,
- Fig. 4: is detailed view of a further intermediate step an embodiment of the inventive method, and
- Fig. 5: is a flow chart of an embodiment of the method for operating a wind turbine and for feeding electrical and/or chemical energy to an electricity and/or chemical grid and/or a chemical and/or electrical storage according to the present invention.

### DETAILED DESCRIPTION

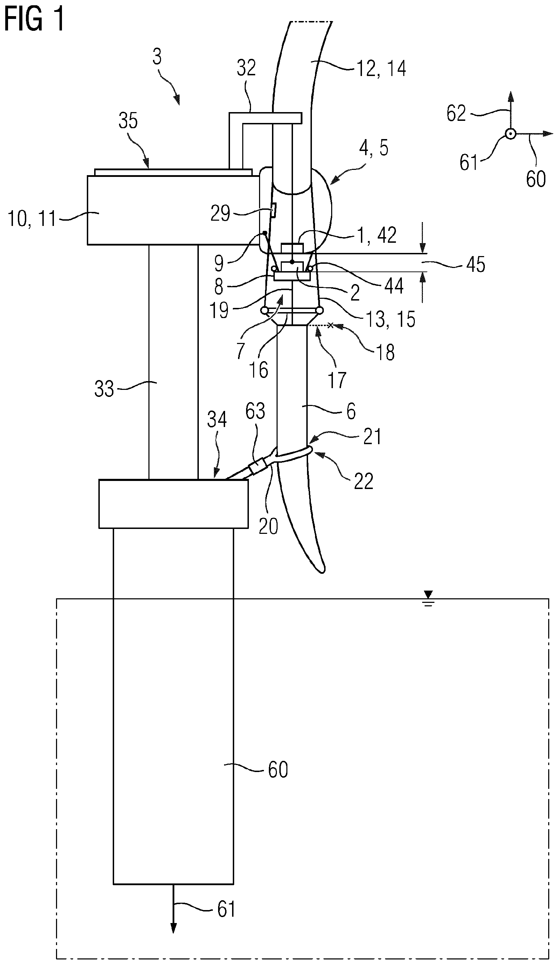

Fig. 1 is a schematic representation of an intermediate step of a method for replacing a previously installed blade bearing 1 with a replacement blade bearing 2 in a wind turbine 3. The method will mainly be discussed using a global coordinate system spanned by a vertical direction 62 and a horizontal plane spanned by the up-wind direction 60 and the cross-wind direction 61. In the example, the wind turbine 3 is a floating off shore wind turbine 3 with a floating basis 60 attached to the seafloor by at least one anchor 61, which is only schematically shown.

To reach the intermediate state shown in fig. 1 from the normal state of operation of the wind turbine 3, a toolkit comprising a service platform 8, connecting means 9 for connecting the service platform 8 to the wind turbine 3 and a replacement blade bearing 2 can be landed on a storage platform 35, e.g., by helicopter or by a ship crane. In the example, the storage platform 35 is located on top of the nacelle 11 of the wind turbine 3. The toolkit can also comprise various other tools and parts that will be discussed below, which are used in the process of replacing the previously installed blade bearing 1.

A rotatable component 4 of the wind turbine 3 that is carrying the previously installed blade bearing 1, is then rotated into a service position 5, in which the previously installed blade bearing 1 is arranged at bottom of the rotatable component 4, as shown in fig. 1. In the example, the rotatable component 4 is formed by the hub of the wind turbine 3.

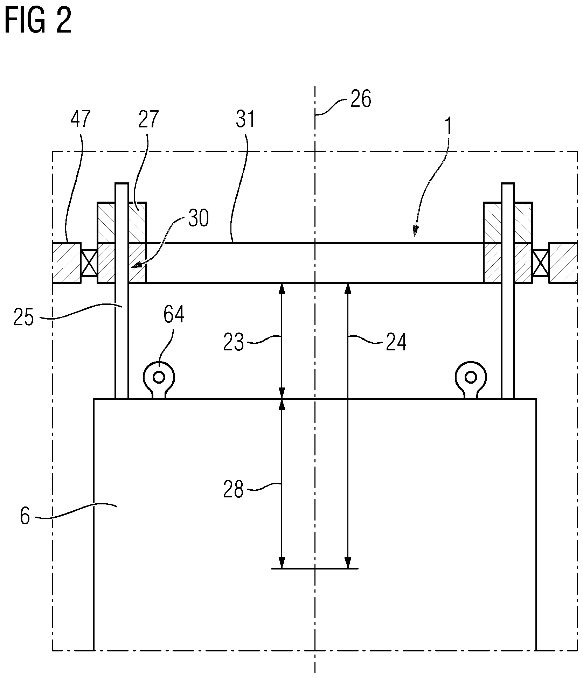

Afterwards the rotor blade 6 is disconnected from the previously installed blade bearing 1 and lowered to create a free space 7 below the previously installed blade bearing 1. In the example the rotor blade 6 is firstly lowered for a first part 23 of the lowering distance 24 by hydraulic actuators 27, as schematically shown in fig. 2.

To install these hydraulic actuators 27, some of the bolts (not shown) that connect the previously installed blade bearing 1 to the rotor blade 6 during the normal operation of the wind turbine 3 can first be removed. These bolts extend through a respective through hole 30 of the inner ring 31 of the previously installed blade bearing 1. Longer bolts 25 can then be inserted into these through holes and connected to the rotor blade 6, e.g., by screwing them into threaded openings of the rotor blade 6.

These longer bolts 25 can be mounted to a respective actuator 27 that can, e.g., be supported by the previously installed blade bearing 1 itself and/or by the rotatable component 4. The actuators 27 are hydraulic actuators 27 in the example.

Once the actuators 27 are mounted, the rotor blade 6 is supported by these actuators 27 and the remaining bolts (not shown) connecting the rotor blade 6 to the previously installed blade bearing 1 can therefore be removed.

Once these further bolts are removed, the actuators 27 can be actuated to lower the rotor blade 6 by shifting the bolts 25 that are attached to the rotor blade 6 in parallel to the rotational axis 26 of the previously installed blade bearing 1.

Once the rotor blade 6 is lowered to the intermediate position shown in fig. 2, at least two eyes 64 can be attached to the rotor blade 6, e.g., by screwing a bolt that is attached to the respective eye into an opening of the rotor blade, that can, e.g., be used during the normal operation of the wind turbine to house a bolt that is connecting the rotor blade 6 to the previously installed blade bearing 1.

In the example, a respective wire 15 that is part of blade attachment means 13, which are used to support of the lowered rotor blade 61 while the previously installed blade bearing 1 is replaced in a later step, is then attached to the respective eye and, via winch 29, to a wire loop that is attached to a respective further component 12 of the wind turbine 3, namely to a further rotor blade 14 in the example. The rotor blade 6 is then lowered for a second part 28 of the lowering distance 24 by using the winch 29.

In particular during the lowering of the rotor blade 6 via the winch 24, the rotor blade 6 can be supported by a push rod 20 as shown in fig. 1. The push rod 20 is mounted to a tower platform 34 mounted to the tower 33, especially as part of a transition piece. An end of the push rod 20, that is shaped as a fork 21 in the example, receives a supported section 22 of the lowered rotor blade 6. The spacing between the supported section 22 and the tower 33 can be adjusted by the actuator 63 of the push rod 20.

To increase the amount of free space 7 that is available for the service platform 8, the pair of the wires 15 used to support the lowered rotor blade 6 is pushed horizontally apart by a spreading component 16 that guides the wires 15 and that is formed in the example by a telescopic rod with an eye for the respective wire at each end.

Additionally or alternatively, the free space 7 could be expanded by the use of an offset component 17 that is only schematically shown in fig. 1, to shift the connection point 18, at which the respective wire 15 is connected, horizontally away from the lowered rotor blade 6 and/or the rotatable component 4 and/or the further rotor blade 14.

The service platform 8 is then installed within the free space 7. In the example, the service platform is attached to the crane 32 while it is still arranged on the storage platform 35. The crane is then used to move the service platform 8 into the position shown in fig. 1, in which it at least partially extends into the free space below the rotatable component 4 and the previously installed blade bearing 1. Once this position is reached, the connecting means 9 are used to mount of the service platform 8 to the rotatable component 4 in such a way, that the weight of the service platform 8 is at least partially supported by the rotatable component 4. In alternate embodiments, the service platform 8 could, additionally or alternatively, be at least partially supported by a different supporting component 10 of the wind turbine 3, e.g., the nacelle 11.

In the example, the connecting means 9 are formed by wires that are attached to the support platform 8 via a respective actuator 44, which is formed as a winch in the example, and attached to the rotatable component 4 via hard points on the outside of the rotatable component 4. Alternatively or additionally, the connecting means could, e.g., comprise telescopic rods and/or could be attached to the inside of the rotatable component 4, e.g., by passing through a manhole or a different opening.

In principle it would also be possible, to pass at least some of the connecting means 9 through the central opening of the previously installed blade bearing 1. In this case it would however be advantageous, to use segmented blade bearings 1, 2 that are segmented in the circumferential direction to allow the removal or installation of the respective blade bearing 1, 2, while the connecting means 9 passes through the central opening.

In the example, the crane 32 is disconnected from the service platform 8 after its installation and the connecting means 9 comprise only two wires to allow for an easy access to the service platform 8 by the crane 32. To further stabilize the service platform 8, further connecting means 19, e.g., at least one additional wire and/or push rod, are therefore used to connect the service platform 8 to the lowered rotor blade 6.

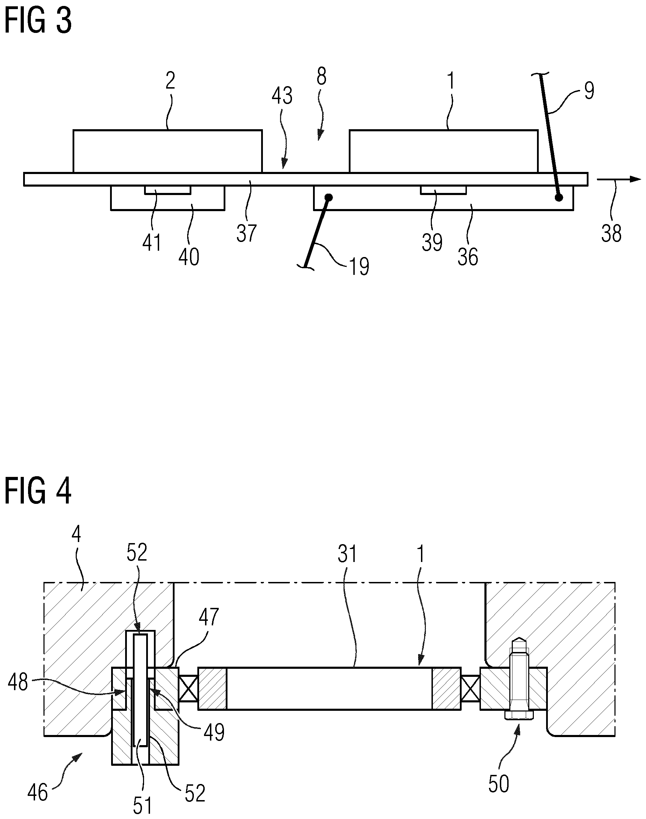

The previously installed blade bearing 1 is then unmounted from the rotatable component 4 and placed on a holding surface 43 of the service platform 8 as shown in fig. 3. In the shown example, the distance 45 between the service platform 8 and the rotatable component 4 is decreased by the actuators 44 until the service platform 8 is located immediately below the previously installed blade bearing 1. The blade bearing 1 can then be disconnected from the rotatable part 4 and the service platform 4 can be lowered again, taking the previously installed blade bearing 1 with it. The previously installed blade bearing 1 can then be removed from the service of platform 8 via the crane 32 and put onto the storage platform 35 and the replacement blade bearing 2 can be lifted from the storage platform 35 onto the service platform 8.

Since access to the area immediately below the previous mounting position 42 of the previously installed blade bearing 1 by the crane 32 can be limited, it is advantageous, when the service platform comprises a sliding part 37 that is movable with respect to a mounting part 36 of the service platform 8 along a movement path 38 that can be essentially parallel to the cross-wind direction 61. The crane 32 can in this case operate in an area of the holding surface 43 that extends beyond the area below the rotating component 4. An examplery embodiment of such a service platform will be discussed later with reference to fig.3.

The replacement blade bearing 2 can then be mounted to the rotatable component 4, e.g., by first moving the sliding part 37 of the support platform 8 in such a way, that the replacement blade bearing 2 is arranged below the previous mounting position 42 of the previously installed blade bearing 1. The service platform 8 can then be lifted by the actuators 44 to move the replacement blade bearing 2 into this mounting position 42. It can then be easily attached to the rotatable component, e.g., by bolts or similar means.

Afterwards the service platform 8 can be uninstalled and, e.g., be lifted onto to the service platform 35 by the crane 32. The rotor blade 6 can then be attached to the replacement blade bearing 2, e.g., by performing the previously discussed steps for unmounting and lowering the rotor blade 6 in reverse order.

The wind turbine 3 is now in a refurbished state, in which the previously installed blade bearing 1 is replaced by the replacement blade bearing 2 and normal operation of the wind turbine 3 can resume. The service platform 8 and the previously installed blade bearing 1 can, e.g., later be removed by a helicopter, a ship crane, or by any other means from the storage platform 35.

The previous discussion assumes that the replacement blade bearing 2 is placed onto the service platform 8 after its installation in the free space 7 and that the previously installed blade bearing 1 is removed from the service platform 8 prior to the uninstallation of the service platform 8. It is however also possible, to have the replacement blade bearing 2 already located on the service platform 8, while the service platform 8 is installed and/or to uninstall the support platform 8 while the previously installed blade bearing 1 is still located on the service platform 8. This can reduce the number of steps necessary to perform the replacement.

An example of a service platform 8 that comprises a sliding section 37, as discussed above, is shown in fig. 3. The service platform 8 comprises the mounting part 36, which is connected to the rotatable component 4 after the service platform 8 is installed, and the sliding part 37 that is movable with respect to the mounting part 36 along the movement path 38, especially in the cross-wind direction 61. In the shown example, the replacement blade bearing 2 is already present on the holding surface 43 formed by the sliding part 37, before the previously installed blade bearing 1 is unmounted from the rotatable component 4 and placed on a free area of the holding surface 43. It is, e.g., possible that the service platform 8 is installed with the replacement blade bearing 2 already located on the holding surface 43 or that it is placed there before the unmounting of the previously installed blade bearing 1, e.g., by the crane 32.

The sliding part 37 can be moved with respect to the mounting part 36 by an actuator 39. This can be used to shift the previously installed blade bearing 1 horizontally away from the previous mounting position 42 and/or to shift the replacement blade bearing 2 below this previous mounting position 42, as discussed above.

To compensate for the different loading conditions of the service platform 8 and to, e.g., shift the center of gravity during the installation of the service platform 8, as already discussed above, the service platform 8 can also comprise a counterweight 40 that can be shifted by a further actuator 41.

It is possible, that rather large frictional forces need to be overcome to remove the previously installed blade bearing 1 from the rotatable component 4, once any bolts 50 and/or other connecting means connecting the previously installed the bearing 1 to the rotatable component 4 are removed. The step of unmounting the previously installed blade bearing 1 from the rotatable component 4 can therefore comprises the mounting a respective removal tool 46, shown in fig. 4, to the previously installed blade bearing 1 by screwing a threaded part 48 of the respective removal tool 46 into a respective threaded through hole 49 of the outer ring 47 of the previously installed blade bearing 1. The threaded through hole 49 can especially be a respective one of the through holes 49 that are housing the bolts 50 used to attached the previously installed blade bearing 1 during the normal operation of the wind turbine 3.

In the example, the threaded part 48 is tube shaped and houses a push rod 51 that is movable with respect to the threaded part 48 by an actuator 52 of the removal tool 46. Once multiple removal tools 46 our installed along the circumference of the previously installed blade bearing 1, the actuators 52 of the removal tools 46 are actuated to push the respective push rod 51 through the threaded part 48 and therefore through the threaded through hole 49 of the previously installed blade bearing 1 and against a counter surface 52 of the rotatable component 4, thereby pushing the threaded part 48 and thereby the previously installed blade bearing 1 away from the counter surface 52.

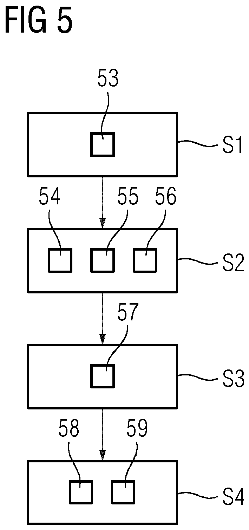

Figure 5 shows a flow chart of a method for operating the wind turbine 3 and for feeding electrical and/or chemical energy 55, 56 to an electricity and/or chemical utility grid 58 and/or a chemical and/or electrical storage 59.

In step S1 the previously installed blade bearing 1 of a wind turbine 3 is replaced with a replacement blade bearing 2 to provide a refurbished state 53 of the wind turbine 3, as discussed above.

In step S2, the wind turbine 3 is used in its refurbished state 53 to generate electrical power 54 and/or electrical energy 55. The electrical energy 55 can, at least in part, be converted into chemical energy 56, e.g., by transforming the electrical energy 55 into hydrogen by electrolysis.

In step S3 the electrical power 54, the electrical energy 55, and/or the chemical energy 56 is at least partially transmitted to an energy receiving arrangement 57, which is preferably not positioned in international waters. The energy receiving arrangement 57 can, e.g., be positioned onshore, or within a 12-miles-zone of a respective sovereign national state over which the respective state has jurisdiction.

In step S4 at least a part of the electrical power 54, the electrical energy 55, and/or the chemical energy 57 is provided to an electrical and/or chemical utility grid 58, in particular to an onshore electrical and/or chemical utility grid 58, and/or a chemical and/or electrical storage 59.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

It has to be noted that embodiments of the invention have been described with reference to different subject matters. In particular, some embodiments have been described with reference to apparatus type claims, such as the use of a fly-jib as part of the toolkit, whereas other embodiments have been described with reference to method type claims, such as the provision of power to an onshore site. However, a person skilled in the art will gather from the above description that, unless otherwise notified, in addition to any combination of features belonging to one type of subject matter, also any combination between features relating to different subject matters, in particular between features of the apparatus type claims and features of the method type claims, such as a combination of the use of a toolkit comprising a service platform with a sliding part, installed after the blade bearing is lowered first by shifting bolts and then further lowered by wires, is considered as to be disclosed with this application.

## Claims

1. Method for replacing a previously installed blade bearing (1) with a replacement blade bearing (2) in a wind turbine (3), in particular in an offshore wind turbine (3), further in particular in a floating offshore wind turbine (3), comprising the steps of
orienting a rotatable component (4) of the wind turbine (3) carrying of the previously installed blade bearing (1) into a service position (5), in which the previously installed blade bearing (1) is arranged at the lower side of the rotatable component (4),
disconnecting a rotor blade (6) from the previously installed blade bearing (1) and lowering the rotor blade (6) to create a free space (7) below the previously installed blade bearing (1),
installing a service platform (8) within the free space (7) by attaching connecting means (9) for the service platform (8) to the rotatable component (4) and/or at least one supporting component (10) of the wind turbine (3) in such a way, that the weight of the service platform (8) is at least partially supported by the rotatable component (4) and/or the supporting component (10),
unmounting the previously installed blade bearing (1) from the rotatable component (4) and mounting the replacement blade bearing (2) to the rotatable component (4), wherein the previously installed blade bearing (1) is located on the service platform (8) during and/or after its unmounting and/or wherein the replacement blade bearing (2) is located on the service platform (8) before and/or during its mounting, and
uninstalling the service platform (8) and connecting the rotor blade (6) to the replacement blade bearing (2).

2. Method according to claim 1, wherein the service platform (8) is installed within the free space (7) between the previously installed blade bearing (1) and the lowered rotor blade (6), while the lowered rotor blade is attached to the rotatable component (4) or a further component (12) of the wind turbine (3) via blade attachment means (13).

3. Method according to claim 2,
wherein the blade attachment means (13) comprise wires (15),
wherein the lowered rotor blade (6) is connected to the rotatable component (4) and/or to at least one further rotor blade (14) attached to the rotatable component (4) via the wires (15).

4. Method according to claim 3, wherein
on the one hand at least one pair of the wires (15) is pushed horizontally apart by a spreading component (16) that guides the wires (15) of the pair prior to and/or after installing the service platform (8), and/or
on the other hand, the blade attachment means (13) comprises at least one offset component (17), wherein at least one of the wires (15) is connected to the lowered rotor blade (6) or to the rotatable component (4) or to the further rotor blade (14) or to a respective one of the further rotor blades (14) via the respective offset component (17), wherein the respective wire (15) is connected to the respective offset component (17) at a connection point (18) of the offset component (17), that is horizontally spaced apart from the lowered rotor blade (6) and/or the rotatable component (4) and/or the respective further rotor blade (14).

5. Method according to one of the claims 2 to 4, wherein the step of installing the service platform (8) comprises the installation of further connecting means (19) that connect the service platform (8) to the lowered rotor blade (6).

6. Method according to one of the claims 2 to 5, wherein a push rod (20) is mounted to the tower or to a tower platform (34) mounted to the tower (33), wherein an end of the push rod (20), that is in particular shaped as a fork (21), receives a supported section (22) of the lowered rotor blade (6).

7. Method according to one of the preceding claims,
wherein the rotor blade (6) is lowered for at least a first part (23) of the lowering distance (24) by shifting bolts (25) that are attached to the rotor blade (6) in parallel to the rotational axis (26) of the previously installed blade bearing (1) by at least one actuator (27) and/or
wherein the rotor blade is lowered for at least a second part (28) of the lowering distance (24) by using a winch (29) to lower wires (15) that connect the rotor blade (6) to the rotatable component (4) and/or to at least one further rotor blade (14) attached to the rotatable component (4).

8. Method according to one of the preceding claims, wherein a crane (32) mounted to a nacelle (11) of the wind turbine (3) or to a component of the wind turbine (3) mounted in the upper third of a tower (33) of the wind turbine (3) is used for
installing the service platform (8) and/or
for putting the replacement bearing (2) onto the service platform (8) and/or
for removing the previously installed bearing (1) from the service platform (8).

9. Method according to one of the preceding claims,
wherein the wind turbine (3) comprises a storage platform (35), which is arranged on top of the nacelle (11) or which is attached to the nacelle (11) or in the upper third of a tower (33) of the wind turbine (3),
wherein the step of installing the service platform (8) comprises moving the service platform (8) from the storage platform (35) to the free space (7), and/or
wherein the step of uninstalling the service platform (8) comprises moving the service platform (8) from the free space (7) to the storage platform (35), and/or
wherein the previously installed blade bearing (1) is moved from the service platform (8) to the storage platform (35) after its unmounting, and/or
wherein the replacement blade bearing (2) is moved from the storage platform (35) to the service platform (8) before its mounting.

10. Method according to one of the preceding claims, wherein the service platform (8) comprises
a mounting part (36), which is connected to the rotatable component (4) and/or the supporting component (10) of the wind turbine (3) after the service platform (8) is installed, and
a sliding part (37) that is movable with respect to the mounting part (36) along a movement path (38),
wherein the previously installed blade bearing (1) is located on the sliding part (37) during and/or after its unmounting, and/or
wherein the replacement blade bearing (2) is located on the sliding part (37) before and/or during its mounting,
wherein the sliding part (37) is moved along the movement path
after unmounting and placing the previously installed blade bearing (1) on the sliding part (37) of the service platform (8) to move the previously installed blade bearing (1) horizontally away from the previous mounting position (42) of the previously installed blade bearing (1), and/or
before mounting the replacement blade bearing (2) to the rotatable component (4) to move the replacement blade bearing (2) towards the previous mounting position (42) of the previously installed blade bearing (1).

11. Method according to one of the preceding claims,
wherein the service platform (8) comprises a holding surface (43),
wherein the previously installed blade bearing (1) is located on the holding surface (43) during and/or after its unmounting, and/or
wherein the replacement blade bearing (2) is located on the holding surface (43) before and/or during its mounting,
wherein the service platform (8) comprises a counterweight (40), that is moveable with respect to the holding surface (43) to shift the center of gravity of the service platform (8), wherein the counter weight (40) is moved
when the previously installed and/or the replacement blade bearing (1, 2) is put down on and/or lifted off the holding surface (43), and/or
after the service platform (8) is attached to the rotatable component (4) and/or the supporting component (10) during the installation of the support platform (8), and/or before the service platform (8) is disconnected from the rotatable component (4) and/or the supporting component (10) during the uninstallation of the support platform (8), and/or
when the or a sliding part (37) of the service platform (8) is moved with respect to the or a mounting part (36) of the service platform (8), which is connected to the rotatable component (4) and/or the supporting component (10) of the wind turbine (3) after the service platform (8) is installed.

12. Method according to one of the preceding claims, wherein at least one actuator (44) is used to adjust the distance (45) between the service platform (8) and the rotatable component (4) after the service platform (8) is installed.

13. Method according to one of the preceding claims,
wherein the step of unmounting the previously installed blade bearing (1) from the rotatable component (4) comprises the mounting at least one removal tool (46) to the previously installed blade bearing (1) by screwing a threaded part (48) of the respective removal tool (46) into a respective threaded through hole (49) of the previously installed blade bearing (1),
wherein the threaded part (48) is tube shaped and houses a push rod (51) that is movable with respect to the threaded part (48) by an actuator (52) of the removal tool (46), and
wherein the actuator (52) of the removal tool (46) is actuated after the mounting of the removal tool (46) to push the push rod (51) through the threaded part (48) and therefore through the threaded through hole (49) of the previously installed blade bearing (1) and against a counter surface (52) of the rotatable component (4), thereby pushing the threaded part (48) and thereby the previously installed blade bearing (1) away from the counter surface (52).

14. Toolkit for replacing a previously installed blade bearing (1) with a replacement blade bearing (2) in a wind turbine (3), in particular in an offshore wind turbine (3), further in particular in a floating offshore wind turbine (3), comprising
a service platform (8) designed to be installed in a free space (7) below the previously installed blade bearing (1) once a rotor blade (6) of the wind turbine (3) is disconnected from the previously installed blade bearing (1) and lowered to create the free space (7),
connecting means (9) for connecting the service platform (8) to at least one component (4, 10) of the wind turbine (3) in such a way, that the weight of the service platform (8) is at least partially supported by that at least one component (4, 10), and
a replacement blade bearing (2).

15. Method for operating a wind turbine (3), in particular an offshore wind turbine (3), further in particular a floating offshore wind turbine (3), and/or for feeding electrical and/or chemical energy (55, 56) to an electricity and/or chemical utility grid (58) and/or a chemical and/or electrical storage (59), the method comprising the following steps:
executing the steps of an embodiment of the method of one of the claims 1 to 13, and/or using the toolkit according to claim 14 to replace a previously installed blade bearing (1) with a replacement blade bearing (2) in the wind turbine (3) to provide a refurbished state (53) of the wind turbine (3),
generating, by the wind turbine (3) in the refurbished state (53), electrical power (54) and/or electrical energy (55), and in particular generating at least partially from the electrical energy (55), further in particular, by transforming electrical energy (55) into hydrogen by electrolysis, chemical energy (56) in form of a gas or liquid, in particular in the form of hydrogen,
transmitting, at least partially, the electrical power (54), the electrical energy (55), and/or the chemical energy (56) to an energy receiving arrangement (57), in particular wherein the receiving arrangement (57) is not positioned in international waters, is positioned onshore, and/or is positioned within a 12-miles-zone of a respective sovereign national state over which the respective state has jurisdiction, and
supplying, at least partially, the electrical power (54), the electrical energy (55), and/or the chemical energy (56) to an electrical and/or chemical utility grid (58), in particular to an onshore electrical and/or chemical utility grid (58), and/or chemical and/or electrical storage (59).
